## Europäisches Patentamt
## European Patent Office
## Office européen des brevets

(19)

(11) Veröffentlichungsnummer: **0 325 935**
**A2**

(12) **EUROPÄISCHE PATENTANMELDUNG**

(21) Anmeldenummer: **89100340.2**

(22) Anmeldetag: **10.01.89**

(51) Int. Cl.⁴: **C08L 61/04 , C08K 3/00 , C08J 9/00**

(30) Priorität: **12.01.88 DE 3800584**

(43) Veröffentlichungstag der Anmeldung:
**02.08.89 Patentblatt 89/31**

(84) Benannte Vertragsstaaten:
**AT BE CH DE ES FR GB IT LI LU NL SE**

(71) Anmelder: **Rühl, Erich**
**Hugenottenstrasse 105**
**D-6382 Friedrichsdorf(DE)**

(72) Erfinder: **Thenner, Johann, Dr.**
**Heinestrasse 7**
**D-6301 Pohlheim 1(DE)**

(74) Vertreter: **Sternagel, Hans-Günther, Dr. et al**
**Patentanwälte Dr. Michael Hann Dr. H.-G.**
**Sternagel Sander Aue 30**
**D-5060 Bergisch Gladbach 2(DE)**

(54) **Nicht brennbarer, Füllstoff enthaltender Hartschaum auf Phenol-Furanharzbasis.**

(57) Nicht brennbarer, Füllstoffe enthaltender Hartschaum mit einem Raumgewicht 150 kg/m³ auf Phenol-Furanharzbasis, der durch Umsetzen einer Harzkomponente (A) aus Phenol-Resolharz und Furanharz mit einer sauren Härterkomponente (B) inGegenwart einer leichtflüchtigen organischen Verbindung als Treibmittel (C) gebildet wird, wobei als Harzkomponente (A) eine Mischung aus
    (a) 75,0-82,0 Gew.Tl. Phenol-Resolvorkondensat
    (b) 7,0-10,0 Gew.Tl. Furfurylalkohol
    (c) 5,5- 6,5 Gew.Tl. Furfurylaldehyd
    (d) 0,5- 5,0 Gew.Tl. eines Siliconpolymeren
    (e) 0,01-1,5 Gew.Tl. eines Schaumstabilisators zusammen mit
    (f) 20,0-80,0 Gew.Tl. Füllstoffe
verwendet wird.

EP 0 325 935 A2

## NICHT BRENNBARER, FüLLSTOFF ENTHALTENDER HARTSCHAUM AUF PHENOL-FURANHARZBASIS

Die Erfindung betrifft Hartschäume auf Phenol-Furanharzbasis, insbesondere für die Verwendung im Bauwesen, die durch Umsetzen einer Harzkomponente (A) auf Basis Phenol-Resolharz und Furanharz mit einer sauren Härterkomponente (B) in Gegenwart einer leicht flüchtigen organischen Verbindung als Treibmittelkomponente gebildet werden, wobei das Raumgewicht 150 kg/m$^3$ beträgt.

Phenol-Furanharzhartschäume mit hohem Füllstoffgehalt, die schwer entflammbar oder nicht brennbar sind, gehören zum Stand der Technik.

So ist zum Beispiel aus der DE-A-28 25 295 ein nicht brennbarer Werkstoff auf Basis von Phenolharzen und Fufurylalkohol bekannt, der keine toxischen Rauchgase entwickelt. Der Werkstoff enthält als anorganischen Füllstoff 62-66 Gew.% Aluminiumoxid oder Aluminiumhydroxid und kann zusätzlich bis zu 3 Gew.% feinteilige Kieselsäure neben weiteren Bestandteilen enthalten. Durch Zusatz von Treibmitteln läßt sich ein geschlossenporiger Hartschaum herstellen, der ein Raumgewicht von etwa 500 kg/m$^3$ aufweist.

In der DE-A-32 44 779 ist ein Hartschaum beschrieben, der ebenfalls auf Phenol-Furanharzbasis gebildet ist und ein Raumgewicht unter 500 kg/m$^3$ aufweist. Auch der dort beschriebene Schaum ist hochgefüllt und enthält mehr als 50 Gew.% anorganischer Partikel als Füllstoff.

In der EP-A-154 874 ist ein Phenol-Furanharz-Hartschaum beschrieben, in dem der Füllstoff neben Aluminiumhydroxid als wesentlichen Bestandteil 7-25 Gew.Tl. Kryolit enthält. Dieser Hartschaum ist ein hochgefüllter Schaum mit einem Gewichtsverhältnis von Harz:Füllstoff von mindestens 1:2,5 bis 1:3,2.

In CH-A-587 879 ist ein Kunstharzschaumbeton mit verbessertem Brandverhalten beschrieben, der Furanharze als organisches Bindemittel enthält und den Anforderungen der Brandprüfung nach DIN 4102 genügt und dessen Raumgewicht in Abhängigkeit vom Füllstoffgehalt 10 bis 600 kg/m$^3$ beträgt. Als Furanharz sind Furanharzmischkondensate auf Basis Kresol, Harnstoff oder Melamin oder Phenol genannt, die bei Zusatz von Säuren exotherm aufschäumen und härten.

Obwohl die bekannten Hartschäume in bezug auf ihr Brandverhalten mittlerweile durchaus als befriedigend angesehen werden können, zeigen diese hochgefüllten Phenol-Furanhartschäume eine Reihe von Nachteilen, die ihrer universellen Anwendung im Wege stehen:

Die vorhandenen Harz-Formulierungen sind relativ viskos. Die Viskosität der schäumenden Harze kann zu unregelmäßigen Schaumgefügen führen, so daß die Handhabung bei der Herstellung größte Sorgfalt erfordert.

Weitere Nachteile sind in der mehr oder weniger ausgeprägten Hygroskopie dieser bekannten Hartschäume zu sehen, die durch Einsatz organischer Sulfonsäuren als Härter bewirkt wird. Auch durch entsprechende Zusätze zum Härtersystem konnte für die bisher bekannten Phenol-Furanhartschäume dieses Problem nicht vollständig beseitigt werden. Dies gilt für die damit verbundene Schwierigkeit, die Korrosionswirkung der Hartschäume, besonders gegen Metalloberflächen, zu verringern bzw. zu beseitigen.

Auch bezüglich ihrer physikalischen Eigenschaften sind die bekannten Hartschäume vom Phenol-Furanharztyp noch nicht als optimal anzusehen.

Durch die große Menge anorganischer Partikel, die bei herkömmlichen Phenol-Furanhartschäumen erforderlich ist, um den für Bauzwecke erforderlichen Grad der Nichtbrennbarkeit oder Schwerentflammbarkeit zu erreichen, wird die Homogenität des Harzgefüges gestört. Ungünstiges Verhalten bei Belastung (Zerbröckeln entlang der Korn/Harz-Grenzen), insbesondere nach Alterung und unerwünschter Abtrieb von rauhen Schaumoberflächen, ist in vielen Fällen nicht tolerierbar. Außerdem kann das Stauben von Feststoffteilchen nicht verhindert werden. Der offene Einsatz im Bergbau, wo die Wirkung von CO-Selbstrettungsmasken nicht durch das Verstopfen der Filter behindert werden darf, ist für herkömmliche, nichtbrennbare Phenol-Furanharz-Hartschäume problematisch.

Auch die Füllstoffsysteme selbst, die bislang im Zusammenhang mit Phenol-Furanharzen bekannt geworden sind - alle diese Füllstoffe sind Variationen auf Aluminiumoxid/Aluminiumhydroxid-Basis - genügen nicht allen Ansprüchen. Es wurde festgestellt, daß die Vermeidung des sogenannten "Al$_2$(OH)$_3$-Effekts" (Wasserdampfbarriere im Falle der Feuerbeaufschlagung) wünschenswert ist.

Bei den Hartschäumen unterscheidet man nach den Rohdichten und der Zellstruktur folgende Typen:

Leichtschäume mit einer Rohdichte von 40-70 kg/m$^3$ mit feinem Zellgefüge, hohem Anteil an geschlossenen Zellen, so daß Wärmeleitfähigkeitswerte von 0,030-0,035 erreicht werden.

Mittelschwere Schäume mit einer Rohdichte von 70-150 g/m$^3$ mit hohem Anteil an geschlossenen Zellen und feinem Zellgefüge, die nach der Temperatureinheitskurve je nach Schichtdicke und Rohdichte 30-90 Min. standhalten (Feuerwiderstandsklassen F 30 bis F 90 nach DIN 4102, Teil 2).

Mittelschwere Schäume mit einer Rohdichte von 60-150 kg/m$^3$ grobzelliger Struktur mit hohem Anteil an offenen Zellen bzw. Zellmembrandurchbrüchen. Neben der Nichtbrennbarkeit ist hohe Schallabsorption erwünscht.

Aufgabe der Erfindung ist es, die Nachteile der bekannten Hartschäume zu überwinden und einen in weiten Grenzen modifizierbaren und damit besonders im Bauwesen universell einsetzbaren Hartschaum geringen Raumgewichts auf Phenol-Furanharzbasis zu schaffen, der ohne hohen Füllstoffanteil, insbesondere ohne Verwendung eines Füllstoffsystems, mit hohem Anteil anorganischer Feststoffpartikel den Anforderungen an nicht brennbare Baustoffe gemäß DIN 4102 und DIN 53436 genügt.

Diese Aufgabe wird gelöst durch ein besonderes Harzsystem, das die Anforderungen an das Zellgefüge beim Aufschäumen erfüllt. Völlig überraschend wurde gefunden, daß man einen nicht brennbaren, Fülstoffe enthaltenden Hartschaum mit einem Raumgewicht bis zu 150 kg/m$^3$ auf der Basis von Phenol-Furanharzen durch Umsetzen einer Harzkomponente (A) aus Phenol-Resolharz und Furanverbindungen mit einer Härterkomponente (B) in Gegenwart einer leichtflüchtigen organischen Verbindung (C) als Treibmittel, der den gewünschten Anforderungen entspricht, dann erhält, wenn man als Harzkomponente (A) einschließlich Füllstoffe eine Mischung aus

a) 75,0 - 82,0 Gew.Tl. Phenol-Resolvorkondensat,
b) 7,0 - 10,0 Gew.Tl. Furfurylalkohol,
c) 5,5 - 6,5 Gew.Tl. Furfurylaldehyd,
d) 0,5 - 5,0 Gew.Tl. eines Siliconpolymeren und
e) 0,01 - 1,5 Gew.Tl. Stabilisator,

zusammen mit 20 bis 80 Gew.Tl. Füllstoff verwendet.

Um den Anforderungen an das Zellgefüge zu genügen, ist es erforderlich, die Ausgangsviskosität des Harzgemisches möglichst niedrig zu halten. Neben Phenol-Resolharzvorkondensaten mit geringer Viskosität (6000-8000 mPa.s bei 25° C) werden anstelle von Furanharzen oder deren Vorkondensaten monomerer Furfurylalkohol in Kombination mit monomerem Furfurylaldehyd für das Harzsystem (A) verwendet. Der Einsatz von Furfurylaldehyd verzögert die an sich schnelle und starke exotherme Vernetzungsreaktion mit Furfurylalkohol. Der langsamere Temperaturanstieg bis zur exothermen Maximaltemperatur beim Aushärten läßt eine verbesserte Wirkung des Treibmittels zu, ohne daß sich die Aufschäumzeiten extrem verlängern. Eine verbesserte Steuerung der Gesamtviskosität und der Grenzflächenspannung zwischen Harzkomponente und gasförmigen Treibmittel in Form von Bläschen wird durch die Kombination von Furfurylalkohol mit Furfurylaldehyd erreicht. Der Zusatz von Siliconpolymeren in Form von Siliconharzen und/oder Siliconkautschuk in bestimmten Anteilen ermöglicht eine Beteiligung dieser Verbindungen an der Umsetzungsreaktion der Phenol-Resolvorkondensate und der monomeren Furanverbindungen.

Das Verhältnis Furfurylalkohol zu Furfurylaldehyd ist von wesentlichem Einfluß auf den Reaktionsablauf während des Schäumprozesses. Furfurylalkohol allein verharzt bei Zugabe von Säuren mit heftiger Reaktion unter starker Wärmeentwicklung spontan. Es findet somit demnach eine unkontrollierte Vernetzungsreaktion nach nicht genau geklärtem Mechanismus statt. Ein Zusatz von Furfurylaldehyd bewirkt dagegen eine Reduzierung der Reaktionsgeschwindigkeit. Die während eines ausreichend verlängerten Zeitraumes entwickelte exotherme Wärmemenge ist insoweit ausreichend, daß im vorliegenden Harzgemisch nach Zusatz von Treibmittel der Schaumvorgang ausgelöst wird.

Durch Variation der Mengenverhältnisse der beiden Furfurylkomponenten kann man Schäumvorgang und Härtevorgang regulieren. Dabei hat sich ergeben, daß es nur in dieser Teilphase möglich ist, Siliconpolymere in größeren Mengen in Phenol-Furanharzsysteme mit einzubauen. Bekanntlich verläuft die Kondensation von Phenol-Resolvorkondensaten zunächst linear, wobei das Zellgefüge noch gummiartig weich ist. Siliconpolymere scheinen in dieser Phase mit noch reaktiven Stellen im Phenol-Furanharzmischkondensat zu verknüpfen.

Die Anwesenheit von geringen Mengen Siliconkautschuk und/oder einer geringen Menge OH-funktioneller Polysiloxane führt zu hochbeanspruchbaren Hartschäumen, die sich durch regelmäßiges Zellgefüge auszeichnen. Bei der praktischen Anwendung bedeutet dies erhöhte Abriebfestigkeit und Druckfestigkeit.

Durch den Einbau von Silicongruppen in das Phenol-Resol-Furanharz wird weiter eine Hydrophobierung erreicht. Schädliche Restsäuremengen aus der Vernetzungsreaktion mit der Härtekomponente (B) sind nicht mehr feststellbar.

Der erfindungsgemäße Hartschaum hat damit überraschenderweise korrosionsschützende Eigenschaften und kann im Gegensatz zu den herkömmlichen Phenol-Furanharzschäumen unbedenklich gemeinsam mit metallischen Bauelementen (z.B. als Isolierschicht auf Metallrohren) verwendet werden.

Geeignete Phenol-Resolvorkondensate sind alkalisch katalysierte Phenol-Formaldehydvorkondensate. Die Oligomeren weisen maximal 5-7 aromatische Ringe auf. Derartige Produkte sind im Handel erhältlich und sollten etwa folgende Daten aufweisen, um für die Erfindung geeignet zu sein:

| $D_{20}$ | 1,23 |
|---|---|
| $n_{D\,25}$ | 1,56 |
| Viskosität | 6000-8000 mPa.s (25°C) |
| pH | 7,0 - 8,0, vorzugsweise 7,0 - 7,3 |
| freies Phenol | 5,0 - 6,0 Gew.% |
| freies Formaldehyd | 2,2 - 2,8 Gew.% |
| Trockenrückstand | 76,0 -81,0 Gew.% |
| Asche | 0,4 - 0,5 Gew.% |

Furfurylalkohol und Furan-2-aldehyd sind übliche Handelsprodukte.

Geeignete Siliconpolymere sind Siliconharze, wie Methylphenylpolysiloxan, wobei lineare oder vernetzte Produkte verwendet werden können. Bei den vernetzten Siliconpolymeren sind die bei Raumtemperatur vernetzenden Methylphenylpolysiloxane bevorzugt. Es kommen nur lösungsmittelfreie Systeme in Betracht, weil Lösungsmittel die Treibmittelwirkung beeinträchtigen könnten. Die Viskosität der Ausgangsprodukte soll 5000-40000 mPa.s oder 100-300 $m^2$/sec. betragen. Werden Phenol-Resolvorkondensate mit sehr niedriger Viskosität eingesetzt, sind Siliconkautschuke entsprechend höherer Viskosität bevorzugt.

Es können aber auch sogenannte Siliconkombinationsharze wie siliconmodifizierte Polyesterharze mit mehr als 50 Gew.% Siliconanteil verwendet werden, wobei in diesem Falle Harze in Xylol/Cyclohexan als Lösungsmittel geeignet sind.

Siliconharze und Siliconkombinationsharze härten ohne besonderen Katalysatorzusatz mit dem Phenol-Resolvorkondensat und den Furanverbindungen aus.

Überraschend ergab sich, daß es bei Siliconkautschuken ausreicht, Borfluorwasserstoffsäure (10 Gew.% im Härter) oder Zinntetrachlorid (20 Gew.% bezogen auf Siliconkautschuk) als Vernetzungskatalysator dem Härtergemisch zuzugeben. Es kann also bei der Herstellung der erfindungsgemäßen Hartschäume auf die für die Vernetzung von Siliconkautschuken üblichen Vernetzungskatalysatoren verzichtet werden, die Anwesenheit der für die Härtung von Phenol-Resolvorkondensaten üblichen sauren Härtersysteme ist für eine Umsetzung der Siliconkautschuke ausreichend.

Für die erwünschte Regulierung der Schaumbildung und seine Stabilisierung sind gegenüber den sauren Katalysatoren beständige Schaumstabilisatoren erforderlich. Siliconverbindungen sind dafür besonders bevorzugt. In manchen Fällen wirken die erfindungsgemäßen Zusätze von Siliconpolymeren gleichzeitig auch schaumstabilisierend, so daß keine zusätzliche Stabilisatoren erforderlich sind. In manchen Fällen bewirken die Siliconpolymeren aber Entschäumung, so daß Schaumstabilisatoren unbedingt erforderlich sind. Dem Fachmann bereitet es keine Schwierigkeiten, aus dem großen Angebot handelsüblicher Schaumstabilisatoren gegebenenfalls geeignete Produkte auszuwählen. Bevorzugte Schaumstabilisatoren sind Verbindungen, in denen der Polysiloxanbestandteil mit Polyetherresten, die noch funktionelle OH-Gruppen aufweisen, über Si-Kohlenstoffverbindungen verbunden ist, beispielsweise Polyalkenylglycol-Polysiloxanpolymere.

Die richtig ausgewählten Schaumstabilisatoren und die spezielle Auswahl von Phenol-Resolvorkondensaten ergibt eine niedrige Viskosität der Harzkomponente, so daß beim Aufschäumen den Anforderungen an das Zellgefüge genügt werden kann. Die Verwendung von Phenol-Resolvorkondensat mit möglichst niedriger Viskosität für die Furanharzkondensation mit monomeren Furfurylalkohol und monomeren Furfurylaldehyd führt zu einer Verlängerung der stark exotherm ablaufenden Vernezteungsreaktion, wie sie bei alleiniger Verwendung von Furfurylalkohol ablaufen würde. Der dadurch ausgelöste zeitlich langsamere Temperaturanstieg hat zur Folge, daß Verdampfung von Treibmittel, Kondensation von Phenol-Resolvorkondensat über einen längeren Zeitraum ablaufen. Die bessere Steuerung von Gesamtviskosität und künstlichen Spannungen (Harzkomponente/Treibmittelgasbläschen) führt zu einer homogeneren Schaumstruktur.

Als Härterkomponente (B) dient wässerige 60-75 Gew.%ige p-Toluolsulfonsäure oder p-Phenolsulfonsäure oder eine Mischung derselben, wobei Gemische von 1:1 bevorzugt sind. Wässerige Borfluorwasserstoffsäure kann ebenfalls als Härterkomponente verwendet werden. Die Härterkomponente (B) wird in Mengen von 0,5-5 Gew.Tl. Harzkomponente (A) verwendet. Der Hartschaum enthält Füllstoffe, wobei ein Gewichtsverhältnis Harzkomponente (A):Füllstoffen von 100:45 bis 100:90 bevorzugt ist. Geeignete Füllstoffe sind Ammoniumpolyphosphat, Ammoniumpentaborat und natürliche und/oder synthetische Silicatmineralien, z.B. Feldspate. Bevorzugt enthalten die Füllstoffe, bezogen auf Gesamtfüllstoffmenge

| | |
|---|---|
| 40-80 Gew,% | Ammoniumpolyphosphat |
| 30-10 Gew.% | Ammoniumpentaborat und |
| 30-10 Gew.% | Silicatmineralien |

Es hat sich herausgestellt, daß sich durch Mitverwendung von Graphitpulver und Wismut III-oxid als Füllstoffe die Beständigkeit des Schaumes bei Brandbelastung noch verbessern läßt. Vorzugsweise weist die Füllstoffzusammensetzung, bezogen auf Gesamtfüllstoffmenge auf:

| | |
|---|---|
| 36-69 Gew.% | Ammoniumpolyphosphat |
| 30-10 Gew.% | Ammoniumpentaborat |
| 3- 8 Gew.% | graphitpulver |
| 1- 3 Gew.% | Wismut-III-oxid |
| 30-10 Gew.% | Natürliche und/oder synthetische Silicatmineralien |

Als Treibmittel werden n-Pentan oder Chlorfluorkohlenwasserstoffe, wie Trifluorchlormethan, Trichlortrifluorethan, verwendet.

Die Erfindung wird anhand der Beispiele noch näher beschrieben. Alle Mengenangaben beziehen sich auf Gewichtsteile bzw. Gewichtsprozent, es sei denn, es ist ausdrücklich etwas anderes angegeben.

## Beispiel 1

Der erfindungsgemäße Hartschaum wird erhalten durch Mischen von 100 Gew.Tl. Harzkomponente (A) (einschließlich Füllstoff) mit 5-18 Gew.Tl. Härterkomponente (B) und 7-13 Gew.Tl. Treibmittel (C), um Schaum unterschiedlicher Rohdichte herzustellen. Die Mischung hat wird in eine offene Plattenform eingegeben und es weden je nach Formbefüllung Platten mit Schichtdicken von 35-95 mm erhalten. Für das Aushärten im Rahmen der exotherm Reaktion waren 3 bis 8 Min. erforderlich.

Zusammensetzung der Harzkomponente (A) mit Füllstoff:

| | Gew.Tl. |
|---|---|
| Resolharztype PS 277 und T 612 S3 mit einer Viskosität von 6000 mPa.s bei 25°C[1] | 12,6 |
| Resolharztype T612 ST mit einer Viskosität von 8000 mPa.s bei 25°C[2] | 38,5 |
| Furfurylaldehyd | 3,9 |
| Furfurylalkohol | 5,8 |
| Siliconkombinationsharz der Type[3], | 0,7 |
| Silicoftal[R] HTL feinteiliges pyrogenes $SiO_2$ | 0,5 |
| Ammoniumpolyphosphat | 25,7 |
| Ammoniumpentaborat | 11,1 |

[1] erhältlich von Bakelite (PS-Typen), T612 SR von Dynamit Nobel
[2] erhältlich von Dynamit Nobel
[3] erhältlich von Goldschmidt A.G.
[4] Polyalkylenglycolpolysiloxanpolymer Tegostab[R] B 2219 erhältlich von Goldschmidt AG

Härterkomponente (B) 75 Gew.%ige wässerige p-Toluolsulfonsäure und Treibmittel (C) Trichlortrifluoräthan (Frigen [R]113)

Je nach verwendeter Härterkomponente und Treibmittelmenge wurden Schäume folgender Rohdichten und mechanischer Festigkeiten erhalten:

| Harzkomponente(A) | Härter (B) | Treibmittel (C) | Rohdichte in kg/m³ | mechanische Festigkeit N/mm² |
|---|---|---|---|---|
| 100 | 17 | 13 | 40 | 0,05 |
| 100 | 15,5 | 13 | 60 | 0,08 |
| 100 | 15,0 | 11 | 90 | 0,10 |
| 100 | 18,0 | 7 | 150 | 0,15 |

Es wurden bei der Brandprüfung nach DIN 4102 Teil 4 folgende Feuerwiderstandsklassen mit den jeweils angegebenen Schichtdicken der Platten erhalten.

| Schaum Rohdichte (kg/m³) | Feuerwiderstandsklasse | | |
|---|---|---|---|
| | F30 | F60 | F90 |
| | (Plattenstärke in mm) | | |
| 40 | 80 | - | - |
| 60 | 70 | 115 | - |
| 90 | 50 | 90 | - |
| 150 | 35 | 65 | 95 |

Beispiel 2

In gleicher Weise wie in Beispiel 1 wurden die Komponenten (A), (B) und (C) gemischt und zu Platten aufgeschäumt. Die Harzkomponente (A) mit Füllstoff hatte folgende Zusammensetzung:

| | Gew.Tl. |
|---|---|
| Resolharztype T 612 S3[1] mit einer Viskosität von 8000 mPa.s | 50,5 |
| Furfurylaldehyd | 3,3 |
| Furfurylalkohol | 6,2 |
| Siliconkombinationsharz der Type Silicoftal HTL[2] | 0,9 |
| Stabilisator[3] Tegostab B 2219 | 0,7 |
| feinteiliges pyrogenes $SiO_2$ | 0,6 |
| Ammoniumpolyphosphat | 37,8 |

[1] erhältlich von Dynamit Nobel
[2] erhältlich von Goldschmidt A.G.
[3] Tegostab B 2219 von Goldschmidt A.G.

Härterkomponente (B) 75 Gew.%ige wässerige p-Toluolsulfonsäure und Treibmittel (C) Trichlortrifluorethan (Frigen[R]113) Je nach Treibmittelmenge wurden folgende Rohdichten und mechanische Festigkeiten des Hartschaumes erhalten:

| Harzkomponente(A) | Härter (B) | Treibmittel (C) | Rohdichte in kg/m³ | mechanische Festigkeit N/mm² |
|---|---|---|---|---|
| 100 | 17 | 15 | 40 | 0,05 |
| 100 | 18 | 13 | 40 | 0,07 |
| 100 | 18 | 11 | 90 | 0,11 |
| 100 | 19 | 10 | 90 | 0,12 |

Bei der Brandprüfung der erhaltenen Platten nach DIN 4102 wurde der CO und $CO_2$-Gehalt nach DIN

6

53436 Teil 1-3 bei 300°C und 400°C ermittelt. Der Anteil an CO betrug 0,008 - 0,01 Vol.%. Dies stellt einen extrem niedrigen Gehalt an Kohlenmonoxid in den Schwelgasen dar.

## Beispiel 3

In gleicher Weise wie in Beispiel 1 wurden die Komponenten (A), (B) und (C) gemischt und zu Platten aufgeschäumt. Die Harzkomponente (A) mit Füllstoff hatte folgende Zusammensetzung:

| Bestandteile | Gew.Tl. |
|---|---|
| Resolharz der Type PS 278[1] mit einer Viskosität von 8000 mPa.s | 76,6 |
| Furfurylaldehyd | 4,6 |
| Furfurylalkohol | 7,6 |
| Siliconkautschuk der Type Sylgard 184[2] | 1,0 |
| Stabilisator[3] | 0,9 |
| feinteiliges pyrogenes $SiO_2$ | 0,7 |
| Ammoniumpolyphosphat | 21,7 |

[1] erhältlich von Bakelite
[2] erhältlich von Dow Corning
[3] Stabilisator Type Tegostab B 2219 von Goldschmidt A.G.

Härterkomponente (B) Gemisch aus 75%iger wässeriger p-Toluolsulfonsäure und 15%iger Borfluorwasserstoffsäure und Treibmittel (c) Trichlortrifluoräthan.

Ein spritzfähiges Komponentengemisch wurde erhalten mit 100 Gew.Tl. (A), 15 Gew.Tl. (B) und 22 Gew.Tl. (C).

Nach dem Aufschäumen betrug die Rohdichte 45 kg/m².

Die mechanische Festigkeit des erhaltenen Hartschaumes betrug 0,03 N/mm².

## Beispiel 4

In gleicher Weise wie in Beispiel 1 wurden die Komponenten (A), (B), und (C) gemischt und zu einem Block aufgeschäumt.

Die Harzkomponente (A) einschließlich Füllstoffe hatte folgende Zusammensetzung:

| Komponenten | Gew.Tl. |
|---|---|
| Resolharz Type 612 SI[1] mit einer Viskosität von 6000 mPa.s | 40,2 |
| Resolharz der Type 612 S3[2] mit einer Viskosität von 8000 mPa.s | 13,2 |
| Furfurylaldehyd | 4,0 |
| Furfurylalkohol | 6,0 |
| Siliconkautschuk der Type 425 RTV[2] | 1,0 |
| Stabilisator[4] | 0,7 |
| feinteiliges pyrogenes $SiO_2$ | 0,6 |
| Ammoniumpolyphosphat | 34,2 |

[1] erhältlich von Dynamit Nobel
[2] erhältlich von Dynamit Nobel
[3] erhältlich von Wacker Chemie
[4] Type Tegostab B 2219 erhältlich von Goldschmidt A.G.

Härterkomponente (B) Misch 75%ige p-Toluolsulfonsäure und 20%ige Borfluorwasserstoffsäure oder Kombinationen von 75%iger wässeriger p-Toluolsulfonsäure mit 1 Gew.% bezogen auf Zinntetrachlorid.

Treibmittel (C) Trichlortrifluoräthan (Frigen 113) Verhältnis der Komponenten (A):(B):(C) = 100:18:11

Die Mischung eignet sich zum Herstellen von Blöcken bis zu 1,5 m³ und ergibt einen sehr feinzelligen Schaum.

Die mittlere Wärmeleitfähigkeit bei einer Mitteltemperatur von 24,5° C bestimmt mit dem Einplattengerät der Type K-Matic (Firma Dynatech) betrug 0,035 W/mK.

Beispiel 5

Die Bestandteile wurden in gleicher Weise wie in Beispiel 1 gemischt, erhalten wurde ein Hartschaum mit erhöhter Druckfestigkeit.
Zusammensetzung der Harzkomponente (A) mit Füllstoff:

|  | Gew.Tl. |
| --- | --- |
| Resolharz Type T 612 S3 mit Viskosität 8000 mPa.s (Dynamit Nobel) | 50,5 |
| Furfurylaldehyd | 3,3 |
| Furfurylalkohol | 6,2 |
| Siliconharz der Type Silicophen 235 (Goldschmidt A.G.) | 0,9 |
| Stabilisator Tegostab B 2219 (Goldschmidt) | 0,7 |
| feinteiliges pyrogenes SiO$_2$ | 0,6 |
| Ammoniumpolyphosphat | 24,5 |
| Tonerdehydrat | 13,3 |

Als Härterkomponente (B) wurde 75%ige p-Toluolsulfonsäure und als Treibmittel Trichlortrifluoräthan (Frigen 113) verwendet.
Je nach verwendeter Härterkomponente und Treibmittelmenge wurden folgende Rohdichten und mechanische Festigkeiten erhalten:

| Harzkomponente(A) | Härter (B) | Treibmittel (C) | Rohdichte in kg/m$^3$ | mechanische Festigkeit N/mm$^2$ |
| --- | --- | --- | --- | --- |
| 100 | 18 | 16 | 60 | 0,09 |
| 100 | 19 | 16 | 90 | 0,15 |

Die mittlere Wärmeleitfähigkeit bei einer Mitteltemperatur von 24,5° C bestimmt mit dem Einplattengerät der Type K-Matic (Firma Dynatech) betrug 0,045.

Beispiel 6

Bei diesem Schaum handelt es sich nach dem Mischen um eine cremige Emulsion für das Ausschäumen vor Ort. Zu Prüfzwecken wurde in Druckformen ausgeschäumt, wobei ausgeprägte dicke Deckschichten (Schwarten) durch Verdichtung an der Grenzzonenschauminnenwand/Schaumaußenseite entstanden, so daß die erhaltenen Formkörper erhöhte Schlagfestigkeit und verbesserten Diffusionswiderstand gegenüber Wasserdampf aufweisen.

Zusammensetzung der Harzkomponente (A):

| Resolharz der Type 612 S3 mit Viskosität 8000 mPa.s | 92 |
| --- | --- |
| Furfurylaldehyd | 1,0 |
| Furfurylalkohol | 5,0 |
| Siliconkautschuk der Type Sylgard 184 (Dow Corning) | 1,0 |
| Stabilisator Tegostab B 2219 | 0,5 |
| feinteiliges pyrogenes SiO$_2$ | 0,5 |

Als Komponente (B) wurde ein Gemisch aus 75%iger p-Toluolsulfonsäure und 5%iger Borfluorwasser-

8

stoffsäure. Als Treibmittelkomponente (C) diente Pentan.

Die Viskosität der cremigen Emulsion ist stark temperaturabhängig und betrug bei 20°C 3,8-4,5 Pa.s und bei 30°C 2,1-2,8 Pa.s.

Beispiel 7

Bei diesem Schaum handelt es sich ebenfalls nach dem Mischen um eine cremige Emulsion für das Ausschäumen vor Ort. Zu Prüfzwecken wurde in Druckformen ausgeschäumt, wobei ausgeprägte dicke Deckschichten (Schwarten) durch Verdichtung an der Grenzzonenschauminnenwand/Schaumaußenseite entstanden, so daß die erhaltenen Formkörper erhöhte Schlagfestigkeit und verbesserten Diffusionswiderstand gegenüber Wasserdampf aufweisen.

Zusammensetzung der Harzkomponente (A) einschließlich Füllstoff in Gew.Tl.

| | |
|---|---|
| Resolharz der Type 612 S3 mit Viskosität 8000 mPa.s (Dynmait Nobel) | 59 |
| Furfurylaldehyd | 1,0 |
| Furfurylalkohol | 5,0 |
| Siliconkautschuk der Type Sylgard 184 (Dow Corning) | 1,0 |
| Stabilisator Tegostab B 2219 (Goldschmidt) | 0,5 |
| feinteiliges pyrogenes $SiO_2$ | 0,5 |
| Graphitpulver | 5,0 |
| Ammoniumpolyphosphat | 18,0 |
| Kaliumtonerdesilicat | 10,0 |

Als Komponente (B) wurde ein Gemisch aus 75%igerp-Toluolsulfonsäure und 5%iger Borfluorwasserstoffsäure verwendet. Als Treibmittelkomponente (C)diente n-Pentan.

Bei den nachfolgend beschriebenen Versuchen wurde folgende festgestellt:

Das erfindungsgemäße Harzfüllstoffsystem führt zu einer Verringerung des CO und $CO_2$-Gehaltes in Schwelgasen bei der Brandprüfung nach DIN 53436 Teile 1-3.

Die dehydratisierte Wirkung der Füllstoffkomponente in einem Modellschaum der vorstehenden Zusammensetzung von Beispiel 6 zeigt folgendes Ergebnis bezüglich der Zusammensetzung der Schwelgase:

| Ammoniumpoly-phosphat Gew.% | Vol.% CO | Vol.% $CO_2$ | Vol.% $CO+CO_2$ |
|---|---|---|---|
| 10 | 2,0 | 1,12 | 3,12 |
| 20 | 0,81 | 0,75 | 1,56 |
| 30 | 0,30 | 0,50 | 0,80 |

Dieser Versuch zeigt, daß die Gesamtenge der Oxidationsprodukte mit steigendem Gehalt an Ammoniumpolyphosphat abnimmt, weil gleichzeitig der Oxidationsprozeß zurückgedrängt wird. Der Kohlenmonoxidanteil in der Gesamtmenge sinkt ebenfalls deutlich mit steigender Polyphosphatgehalt.

Dieser Versuch zeigt, daß die Gesamtenge der Oxidationsprodukte mit steigendem Gehalt an Ammoniumpolyphosphat abnimmt, weil gleichzeitig der Oxidationsprozeß zurückgedrängt wird. Der Kohlenmonoxidanteil in der Gesamtmenge sinkt ebenfalls deutlich mit steigendem Gehalt an Polyphosphaten ab.

Setzt man bei konstanten Anteilen von Ammoniumpolyphosphat steigende Mengen wasserabspaltende Füllstofe wie Tonerdetrihydrat zu, so ergibt sich ein den oben erhaltenen Ergebnissen entgegengesetzter Effekt:

| Zusatz | Vol.% CO | Vol.% $CO_2$ | Vol.% $CO + CO_2$ | Faktor |
|--------|----------|--------------|----------------|--------|
| 0 | 0,009 | 0,03 | 0,039 | 23,0 |
| 5 % | 0,014 | 0,04 | 0,054 | 25,0 |
| 10 % | 0,022 | 0,044 | 0,066 | 33,3 |
| 15 | 0,046 | 0,05 | 0,096 | 47,9 |

Die Summe der Oxidationsprodukte nimmt zu und wie der Faktor angibt, steigt der Anteil an CO in der Summe Oxidationsprodukte von 23 auf 48 %.

Es erfolgt im Gasgleichgewicht eine Verschiebung in Richtung erhöhter CO-Werte. Die sogenannte Wasserdampfbarriere wirkt demnach nur in Bezug einer Ausrüstung, um Schwerentflammbarkeit (Klasse B1,DIN 4102) zu erreichen, genügt aber nicht bzw. fördert die Bildung toxischer Schwelgase.

Die mit der dehydratisierenden Wirkung des Harz-Füllstoffsystems verknüpfte Carbonierung verhindert des weiteren die übermäßig starke Bildung anderer Pyrolyseprodukte, wie niedere Alkane, Alkene usw., welche alle leicht entzündbar und brennbar sind.

Dies zeigen die Ofen- und Brandschachtwerte, welche laut DIN 4102 der Baustoffklasse A 2 entsprechen.

**Ansprüche**

1. Nicht brennbarer, Füllstoff enthaltender Hartschaum mit einem Raumgewicht 150 kg/m³ auf Phenol-Furanharzbasis, der durch Umsetzen einer Harzkomponente (A) aus Phenol-Resolharz und Furanharz mit einer sauren Härterkomponente (B) in Gegenwart einer leicht flüchtigen organischen Verbindung als Treibmittel (C) gebildet wird,
**dadurch gekennzeichnet,**
daß als Harzkomponente (A) eine Mischung aus

| a) | 75,0 - | 82,0 Gew.Tl | Phenol-Resol-Vorkondensat, |
|----|--------|-------------|----------------------------|
| b) | 7,0 - | 10,0 Gew.Tl. | Furfurylalkohol, |
| c) | 5,5 - | 6,5 Gew.Tl. | Furfurylaldehyd, |
| d) | 0,5 - | 5,0 Gew.Tl. | eines Siliconpolymeren, |
| e) | 0,01 - | 1,5 Gew.Tl. | Schaumstabilisator zusammen mit |
| f) | 20,0 - | 80,0 Gew.Tl. | Füllstoffe |

verwendet wird.

2. Hartschaum nach Anspruch 1,
**dadurch gekennzeichnet,**
daß das Phenol-Resol-Verkondensat das Reaktionsprodukt einer im alkalischen Bereich ablaufenden Kondensation von Phenol und Formaldehyd ist und das Oligomer eine Viskosität bei 25°C von 6000-8000 mPa.s aufweist.

3. Hartschaum nach Ansprüchen 1 oder 2,
**dadurch gekennzeichnet,**
daß das Siliconpolymer ein Siliconharz, ein Siliconkombinationsharz oder ein Siliconelastomer ist.

4. Hartschaum nach Ansprüchen 1 bis 3,
**dadurch gekennzeichnet,**
daß der Schaumstabilisator eine Siliconverbindung ist, die noch funktionelle OH-Gruppen enthält.

5. Hartschaum nach Ansprüchen 1 bis 4,
**dadurch gekennzeichnet,**
daß die Füllstoffe bezogen auf Gesamtfüllstoffmenge

| 40 - 80 Gew.% | Ammoniumpolyphosphat, |
| 30 - 10 Gew.% | Ammoniumpentaborat und |
| 30 - 10 Gew.% | natürliche und/oder synthetische Silicatmineralien enthalten. |

6. Hartschaum nach Ansprüchen 1 bis 4,
**dadurch gekennzeichnet,**
daß die Füllstoffe, bezogen auf Gesamtfüllstoffmenge

| 36 - 59 Gew.% | Ammoniumpolyphosphat |
| 30 - 10 Gew.% | Ammoniumpentaborat |
| 3 - 8 Gew.% | Graphitpulver |
| 1 - 3 Gew.% | Wismut-III-oxid |
| 3 - 10 Gew.% | natürliche und/oder synthetische Silicatmineralien enthalten. |

7. Hartschaum nach Ansprüchen 1 bis 6,
**dadurch gekennzeichnet,**
daß die Gewichtsverhältnis Harzkomponente (A):Füllstoffe von 100:45 bis 100:90 beträgt.

8. Hartschaum nach Anspruch 1,
**dadurch gekennzeichnet,**
daß als Härterkomponente (B) wässerige 65-75 Gew.%ige p-Toluolsulfonsäure oder Phenolsulfonsäure oder eine Mischung derselben in einer Menge von 0,5-5 Gew.Tl. pro 100 Gew.Tl. Harzkomponente (A) vorhanden ist.

9. Verwendung des Hartschaumes nach Ansprüchen 1 bis 8 im Bauwesen in Form vorgefertigter Platten, Rohrummantelungen, Halbschalen.

10. Verwendung des Hartschaumes nach Ansprüchen 1 bis 8 im Bauwesen zum Ausschäumen von Hohlräumen vor Ort.

11. Verwendung des Hartschaumes nach Ansprüchen 1 bis 8 im Bauwesen als Schaumbeschichtung durch Aufspritzen der gemischten Komponente mittels Aufspritzeinrichtungen.

12. Reaktionssatz zur Herstellung des Hartschaumes nach Ansprüchen 1 bis 8,
**dadurch gekennzeichnet,**
daß in getrennter Verpackung die Komponenten (A) und (B) in den Gewichtsverhältnissen gemäß den Ansprüchen vorhanden sind, wobei die Komponenten (A) und (C) bereits gemischt in eienr gemeinsamen Verpackung angeordnet sind.